# FASCICULE DE BREVET EUROPEEN

(11) **EP 0 765 942 B1**
(45) Date de publication et mention de la délivrance du brevet: **03.05.2000**
(21) Numéro de dépôt: 96401850.1
(22) Date de dépôt: 29.08.1996
(51) Int. Cl.: C21D 9/04

(54) **Procédé de traitement thermique d'un rail en acier**
Verfahren zum Wärmebehandeln von Stahlschienen
Process for heat treating steel rails

(30) Priorité: 28.09.1995 FR 9510986
(43) Date de publication de la demande: 02.04.1997
(73) Titulaire: Sogerail, 57700 Hayange (FR)
(72) Inventeur: Perrin, Jean Luc, 57310 Bertrange (FR)
(74) Mandataire: Ventavoli, Roger

(56) Documents cités:
- FR-A- 1 237 558
- FR-A- 2 109 121
- FR-A- 2 479 265
- GB-A- 2 194 557
- US-A- 5 004 510

## Description

La présente invention concerne la fabrications d'un rail de chemin de fer en acier à haute teneur en carbone ou faiblement allié.

Un rail de chemin de fer est un produit long en acier laminé, profilé pour comporter un champignon sur lequel roulent les roues des trains, un patin destiné à fixer le rail sur le sol par l'intermédiaire de traverses et une âme qui relie le champignon au patin. Le champignon doit avoir une grande dureté pour résister à l'usure engendrée par le contact avec les roues; l'âme et le patin doivent avoir une résistance mécanique suffisante pour assurer le bon maintien du champignon; l'ensemble doit être bien rectiligne, au moins avant montage sur la voie, afin d'assurer une bonne qualité de roulement. En général, le rail est soumis à des contraintes résiduelles internes dont la répartition a une très grande importance pour la sécurité vis à vis de la rupture fragile. Il existe plusieurs qualités de rails qui se distinguent notamment par la dureté superficielle du champignon et par les caractéristiques mécaniques de l'âme et du patin et par la répartition des contraintes résiduelles internes. Ces différentes qualités sont adaptés à la réalisation de voies destinées à recevoir des convois plus ou moins lourds ou plus ou moins rapides.

Pour fabriquer un rail destiné à recevoir des convois lourds ou rapides, on utilise un acier eutectoïde à haute teneur en carbone éventuellement faiblement allié dont la composition chimique comprend, en poids, comme défini dans la norme 860-0 de l'Union Internationale des Chemins de Fer, jusqu'à 0,82% de carbone, jusqu'à 1,70% de manganèse, jusqu'à 0,9% de silicium, jusqu'à 1,3% de chrome, éventuellement des éléments affinant le grain, le reste étant du fer et des impureté résultant de l'élaboration. Le rail est obtenu par laminage d'un demi produit suivi d'un traitement thermique partiel ou total et, éventuellement, d'un dressage. Le traitement thermique est destiné à conférer au moins au champignon une structure perlitique fine très dure.

Selon une première technique, après laminage et refroidissement, le champignon est partiellement austénitisé par chauffage au voisinage de 900°C puis refroidit par soufflage d'air ou pulvérisation d'eau. Cette technique présente le double inconvénient de créer dans les zones réchauffées entre les point de transformation Ac₁ et Ac₃ des zones de moindre résistance et, surtout, de provoquer une déformation très importante du rail qui nécessite un dressage lequel engendre des contraintes résiduelles très défavorables à la tenue en service du rail.

Pour remédier à ces inconvénients, on a proposé, notamment dans la demande de brevet français n° 2 603 306, de compléter le traitement thermique du champignon par un traitement thermique partiel et simultané du patin de façon à ce que les déformations engendrées par le traitement thermique du patin viennent équilibrer les déformations engendrées par le traitement thermique du champignon. Il n'est, alors, plus nécessaire de faire un dressage du rail. Cependant, dans cette technique, l'âme n'est pas traitée et les zones de liaison de l'âme et du champignon d'une part, de l'âme et du patin d'autre part, sont fragilisées parce qu'elles sont nécessairement réchauffées entre les point de transformation Ac₁ et Ac₃ ce qui adoucit le métal.

Selon une autre technique, décrite notamment dans le brevet français n° 2 109 121, le rail est traité dans toute sa masse pour obtenir une structure perlitique fine très dure par refroidissement accéléré soit après austénitisation homogène par réchauffage différé, soit directement dans la chaude de laminage. Le rail ainsi obtenu a une structure homogène et ne présente pas de zones de faiblesse dans l'âme ou à la liaison entre l'âme et le champignon ou le patin. Cependant, il a été constaté lors de l'application de cette technique que le rail est déformé par le traitement thermique, bien que celui-ci soit homogène et donc, a priori, équilibré, et il est nécessaire de faire un dressage. Ce dressage engendre des contraintes résiduelles qui affaiblissent l'âme du rail.

Les contraintes résiduelles engendrées par un dressage trop important affaiblissent l'âme du rail en favorisant la propagation des fissures longitudinales parce qu'elles tendent à les ouvrir. Pour évaluer la sensibilité de l'âme du rail à la propagation de fissures, on fait un essai qui consiste à faire à une extrémité du rail une entaille à l'aide d'un trait de scie, et à mesurer l'écartement des lèvres de l'entaille. Lorsque l'écartement des lèvres de l'entaille est supérieur à l'épaisseur du trait de scie les contraintes résiduelles tendent à faciliter la propagation des fissures, dans le cas contraire les contraintes résiduelles s'opposent à la propagation, et même à l'initiation, des fissures.

Le but de la présente invention est de remédier à ces inconvénients en proposant un procédé de fabrication d'un rail en acier eutectoïde au carbone ou faiblement allié, qui conduise à une structure perlitique fine dans toute la section du rail et à une répartition des contraintes résiduelles qui tende à s'opposer à la propagation des fissures longitudinales dans l'âme du rail.

A cet effet l'invention a pour objet un procédé de traitement thermique d'un rail en acier du type comprenant un champignon, une âme et un patin, selon lequel:
- on préchauffe successivement ou simultanément chaque section transversale du rail au dessus de la température de fin de transformation métallurgique au réchauffage de l'acier dont est constitué le rail de façon à ce que, simultanément ou successivement, dans chaque section transversale du rail, l'acier ait uniformément une structure austénitique homogène,
- on surchauffe successivement ou simultanément la partie de chaque section transversale du rail correspondant au champignon de façon à ce que la température moyenne de ladite partie de chaque section transversale du rail soit supérieure d'au moins 40 °C à la température moyenne de la partie de la même section transversale du rail correspondant au patin, mais inférieure à 1050°C et de préférence 1000°C,
- on refroidit successivement ou simultanément chaque section transversale du rail au dessous de la température de fin de transformation au refroidissement de façon à obtenir une structure perlitique fine dans toute la section transversale du rail,
- et, éventuellement, on laisse refroidir simultanément ou successivement chaque section transversale du rail jusqu'à la température ambiante.

De préférence, en fin de préchauffage, en tout point de chaque section transversale du rail, la température est supérieure à Ac₃ + 100 C; Ac₃ étant la température de transformation au réchauffage à vitesse lente de l'acier dont est constitué le rail.

En fin de chauffage supplémentaire la température moyenne de la partie de chaque section transversale du rail correspondant au champignon peut être supérieure d'au moins 80°C à la température moyenne de la partie de la même section transversale correspondant au patin.

Il est préférable que le préchauffage de chaque section transversale du rail dure au moins 4 minutes. Le préchauffage peut comporter une succession alternée de préchauffages partiels et d'homogénéisation de façon à obtenir en fin de préchauffage une répartition aussi homogène que possible de la température dans chaque section transversale du rail.

Il est préférable que, lors du refroidissement, la vitesse de refroidissement en peau du rail au passage à la température de 700°C soit inférieure à 10°C/s, et, éventuellement, que la vitesse de refroidissement en peau de l'âme et du patin du rail au passage à la température de 700°C soit inférieure à 5°C/s.

De préférence, en fin de refroidissement la température en peau du champignon du rail est inférieure ou égale à 400°C.

Le traitement thermique du rail peut être réalisé au défilé par passage du rail successivement dans un moyen de préchauffage, un moyen de surchauffage et un moyen de refroidissement.

Le moyen préchauffage peut être un moyen de chauffage par induction fonctionnant à une fréquence supérieure ou égale à 2000 Hertz et il peut comporter une pluralité de zones de chauffage séparées par des zones d'égalisation.

Le moyen de surchauffage peut être un moyen de chauffage par induction fonctionnant de préférence à une fréquence supérieure ou égale à 1000 Hertz.

Le moyen de refroidissement peut être constitué d'au moins deux, et de préférence, d'une pluralité de rampes parallèles au rail, munies d'une pluralité de buses pouvant souffler de l'air ou un brouillard; les buses pouvant êtres commandées indépendamment les unes des autres ou par groupes.

L'invention va maintenant être décrite plus en détail mais de façon non limitative en regard des figures annexées dans lesquelles:
- la figure 1 représente en perspective un rail défilant dans une installation de traitement thermique,
- la figure 2 représente un exemple d'évolution de la température en différents point de la section d'un rail, en fonction du temps, pendant un traitement thermique.

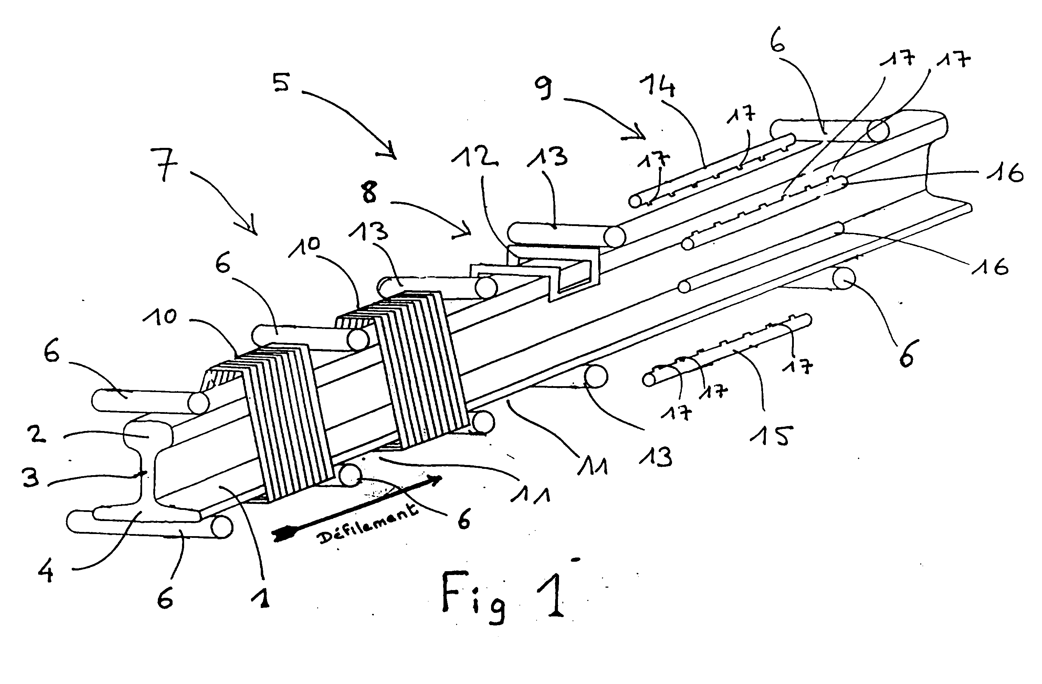

Le rail 1, obtenu par laminage à chaud d'un demi produit en acier eutectoïde au carbone ou faiblement allié dont la composition chimique comprend, en poids, comme défini dans la norme 860-0 de l'Union Internationale des Chemins de Fer, jusqu'à 0,82% de carbone, jusqu'à 1,70% de manganèse, jusqu'à 0,9% de silicium, jusqu'à 1,3% de chrome, éventuellement des éléments affinant le grain, le reste étant du fer et des impureté résultant de l'élaboration, comporte un champignon 2, une âme 3 et un patin 4. Après laminage, le rail 1 est refroidi jusqu'à la température ambiante puis traité thermiquement pour lui conférer ses propriétés d'emploi définitives. Le traitement thermique est effectué, par exemple, en faisant défiler le rail dans une installation de traitement thermique en continu du type de l'installation de traitement thermique en continu 5 représentée à la figure 1. Ce traitement thermique a pour but de conférer au rail une structure perlitique fine très dure principalement dans le champignon mais également dans toute la masse du rail. Il a également pour but d'engendrer dans le rail des contraintes résiduelles s'opposant à la propagation de fissures longitudinales dans l'âme.

L'installation de traitement thermique 5 comporte, notamment en entrée et en sortie, des galets de guidage 6, et, disposés successivement et dans cet ordre, un moyen de préchauffage 7 de toute la section du rail 1, un moyen de chauffage complémentaire 8 du champignon 2 et un moyen de refroidissement accéléré 9 de toute la section du rail 1.

Le moyen de préchauffage 7 est constitué d'au moins une bobine 10 de chauffage par induction alimentée en courant électrique alternatif de fréquence supérieure ou égale, de préférence, à 2000 Hertz, suivie d'un espace libre 11. Le moyen de chauffage comporte ainsi une succession alternée de zones de chauffage correspondant aux bobines 10, et de zones d'égalisation correspondant aux espaces libres 11. Les bobines sont reliées à des moyens d'alimentation électrique connus en eux même et non représentés; elle peuvent être parcourues par un courant d'eau de refroidissement conformément aux règles de l'art.

Le moyen de chauffage complémentaire 8 est constitué d'un inducteur 12 en forme de U s'étendant longitudinalement au dessus du rail et alimenté de façon connue en elle même par du courant électrique alternatif dont la fréquence est, de préférence, supérieure ou égale à 1000 Hertz. L'inducteur 12 est suivi et précédé de galets de guidage 13.

Le moyen de refroidissement accéléré 9 est constitué d'au moins une rampe 14 supérieure s'étendant longitudinalement au dessus de la ligne de passage du champignon du rail et d'une rampe 15 inférieure s'étendant longitudinalement en dessous de la ligne de passage du patin du rail, et, de préférence, d'une pluralité de rampes 16 s'étendant longitudinalement de part et d'autre de la ligne de passage de l'âme du rail. Chaque rampe 14, 15, 16 est munie d'une pluralité de buses 17 pouvant souffler de l'air ou un brouillard. Les buses pouvant êtres commandées indépendamment les unes des autres ou par groupes de façon à pouvoir moduler indépendamment la vigueur et la durée du refroidissement sur le champignon, l'âme et le patin.

Pour effectuer le traitement thermique du rail 1, on fait défiler le rail dans l'installation de traitement thermique 5 dans le sens de la flèche de telle sorte que chaque section transversale du rail qui comporte une partie relative au champignon, une partie relative à l'âme et une partie relative au patin, passe successivement à travers le moyen de préchauffage 7, le moyen de chauffage complémentaire 8 et le moyen de refroidissement accéléré 9.

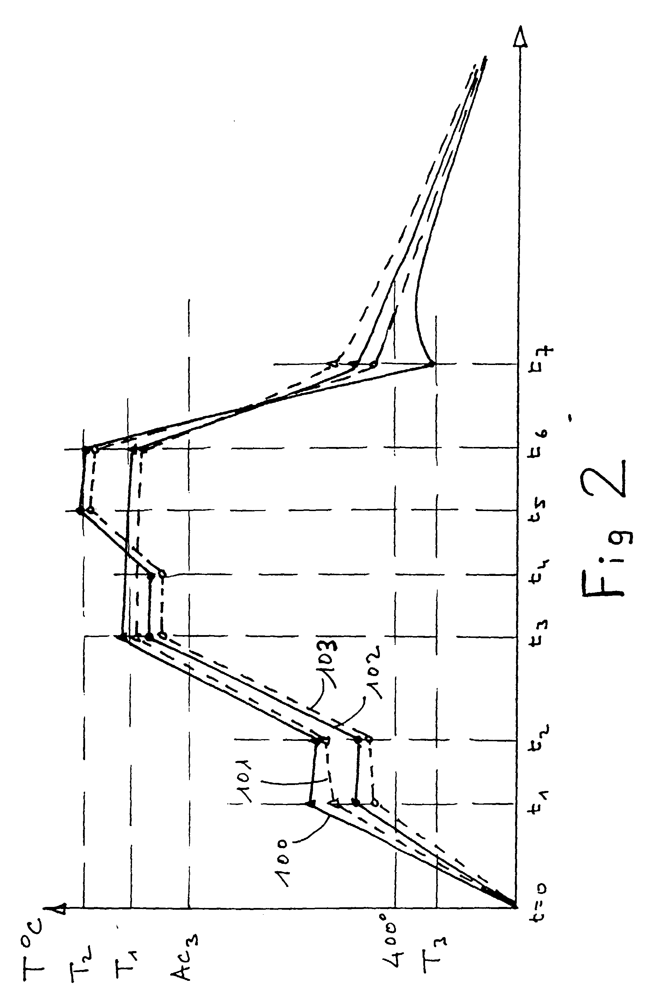

Lors de la traversée de l'installation de traitement thermique 5, chaque section transversale du rail subit un cycle thermique du type de celui qui est représenté à la figure 2, avec en abscisses le temps et en ordonnées la température. Sur cette figure, la courbe 100 représente le cycle thermique de la peau du patin et de l'âme et la courbe 101 représente le cycle thermique de points situés à coeur du patin ou de l'âme; les courbes 102 et 103 correspondent, respectivement, à la peau et au coeur du champignon.

Si on considère qu'à l'instant t = 0 une section transversale quelconque du rail entre dans la première bobine 10 du moyen de préchauffage 7, le cycle thermique subi par la section transversale du rail pendant tout le traitement thermique peut être décrit de la façon suivante:
- entre t = 0 et l'instant t₁ auquel la section transversale du rail sort de la première bobine 10, l'ensemble de la section du rail est chauffée et portée à des températures de quelques centaines de degrés, 500°C à 600°C par exemple; la peau est chauffée plus vite que l'intérieur de la section, et, du fait de la fréquence choisie pour le courant électrique d'alimentation des bobines, la partie de la section transversale du rail correspondant à l'âme et au patin est chauffée plus vite, et donc portée à une température plus élevée que la partie de la section transversale du rail correspondant au champignon;
- entre les instants t₁ et t₂ la section transversale du rail traverse la première zone d'égalisation 11 dans laquelle elle n'est pas chauffée si bien que les température de peau baissent légèrement tandis que les températures de coeur augmentent légèrement du fait de la diffusion de la chaleur à l'intérieur du rail, et, dans le champignon comme dans l'âme et dans le patin, les températures de coeur se rapprochent des températures de peau;
- entre les instants t₂ et t₃, la section transversale du rail traverse la deuxième bobine 10 de préchauffage qui la chauffe pour porter tous ses points à des températures supérieures à la température de fin de transformation austénitique au réchauffage de l'acier dont est constitué le rail, pour obtenir, dans toute la section transversale du rail, une structure austénitique; le préchauffage total dure quelques minutes, en général moins de 5 mn, et, dans ces conditions, la température de fin de transformation austénitique au réchauffage est supérieure d'au moins 100°C à la température Ac₃ de fin de transformation austénitique en réchauffage lent; pour les mêmes raisons que précédemment, à l'instant t₃ la température moyenne de l'âme et du patin est supérieure à la température moyenne du champignon;
- entre les instants t₃ et t₄, la section transversale du rail traverse la deuxième zone d'égalisation 11 et les températures s'égalisent d'une part dans la partie de la section transversale du rail correspondant au champignon, et d'autre part dans la partie de la section transversale du rail correspondant à l'âme et au patin; afin d'obtenir une Austénite bien homogène sans être obligé de chauffer le rail à trop haute température, ce qui ferait grossir le grain de façon excessive, la durée totale du préchauffage, c'est à dire le temps qui s'écoule entre t = 0 et t₄, doit, de préférence être supérieur à 4 mn;
- entre les instants t₄ et t₅, la section transversale du rail passe sous le moyen 8 de surchauffage du champignon, et la partie de la section transversale du rail correspondant au champignon est échauffée de telle sorte que sa température moyenne atteinte T₂ soit supérieure d'au moins 40°C à la température moyenne T₁ de la partie de la section transversale du rail correspondant à l'âme et au patin, sans toutefois dépasser 1050°C, et de préférence 1000°C, de façon à ne pas provoquer un grossissement excessif du grain austénitique;
- entre les instants t₅ et t₆, la section transversale du rail traverse une zone d'égalisation puis pénètre dans le moyen 9 de refroidissement accéléré pour en ressortir à l'instant t₇; pendant la traversée du moyen 9 de refroidissement accéléré, la partie de la section transversale du rail correspondant au champignon est refroidie dans des conditions définies par la température en peau T₃ à l'instant t₇ et par la vitesse Vr de refroidissement au passage à 700°C de la peau; la partie de la section transversale du rail correspondant au patin et à l'âme est refroidie moins énergiquement que la partie de la section transversale du rail correspondant au champignon, si bien que, en sortie du moyen 9 de refroidissement accéléré, sa température moyenne est supérieure à la température moyenne de la partie de la section transversale du rail correspondant au champignon;
- au delà de l'instant t₇, le rail se refroidit naturellement à l'air jusqu'à la température ambiante; en sortie du moyen 9 de refroidissement accéléré, la température en peau de la partie de la section transversale du rail correspondant au champignon étant sensiblement plus basse que la température à coeur, au début du refroidissement naturel à l'air, on observe une remontée de la température en peau résultant de l'homogénéisation de la température dans la section par diffusion de la chaleur interne.

La vitesse de refroidissement Vr ainsi que la température T₃ sont choisies pour que la structure obtenue soit de la perlite fine la plus dure possible sans qu'il y ait de traces de bainite ou de martensite. Pour cela, la vitesse de refroidissement Vr doit être la plus élevée possible sans toutefois dépasser la vitesse qui permet d'obtenir une structure bainitique ou martensitique, et la température T₃ doit être suffisamment basse, mais pas trop, pour que la transformation perlitique soit complète. T₃ doit être inférieure à la température de fin de transformation au refroidissement de l'acier dont est constitué le rail.

Le traitement thermique peut être une trempe perlitique complète, auquel cas, la température T₃ est la température ambiante; le traitement thermique peut également être un traitement quasi isotherme, et dans ce cas, la température T₃ est de l'ordre de quelques centaines de degrés.

La structure et la dureté souhaités peuvent être les mêmes pour le patin, l'âme et la champignon, et dans ce cas, la vitesse de refroidissement moyenne de la partie de la section transversale du rail correspondant à l'âme et au patin est voisine de celle de la partie de la section transversale du rail correspondant au champignon. On peut, au contraire, souhaiter une dureté plus faible pour l'âme et le patin que pour le champignon, auquel cas, on impose à la partie de la section transversale du rail correspondant au patin et à l'âme une vitesse de refroidissement plus faible que celle de la partie de la section transversale du rail correspondant au champignon. Enfin, pour ajuster la température de fin de refroidissement accéléré de la partie de la section transversale du rail correspondant à l'âme et au patin, on peut réduire la durée du refroidissement de cette partie en ne faisant pas fonctionner les buses disposées en regard de l'âme ou du patin du rail, et situées du côté de la sortie du dispositif de refroidissement accéléré.

Les conditions particulières du refroidissement accéléré doivent être déterminées en fonction, notamment, des caractéristiques particulières du diagramme de transformation en refroidissement continu de l'acier dont est constitué le rail. En pratique, et pour les aciers considérés, la vitesse Vr de refroidissement de la peau de la partie de la section transversale du rail correspondant au champignon doit être inférieure à 10°C/s, et , de préférence, supérieure à 5°C/s; la vitesse moyenne de refroidissement de la partie de la section transversale du rail correspondant au patin et à l'âme doit, de préférence, être inférieure à 5°C/s; de préférence également, la température T₃ à la quelle la peau de la partie de la section transversale du rail sort du moyen de refroidissement accéléré doit être inférieure à 400°C.

Les inventeurs ont constaté que, lors du traitement thermique, le rail se déforme, mais que, lorsqu'on souhaite obtenir une dureté homogène dans tout le rail, c'est à dire lorsqu'on refroidit à des vitesses comparables l'ensemble de la section du rail, si la partie de la section transversale du rail correspondant au champignon a été surchauffée de 40°C à 80°C par rapport à la partie de la section transversale du rail correspondant au patin et à l'âme, après retour à la température ambiante, le rail était peu déformé, et, après un éventuel dressage léger, l'âme était soumises à des contraintes résiduelles favorisant la fermeture des fissures.

Les inventeurs ont également constaté que pour obtenir le même résultat en durcissant plus le champignon que l'âme ou le patin, la surchauffe devait être supérieure à 80°C, et, de préférence, comprise entre 100°C et 200°C.

Dans le mode de réalisation décrit, le préchauffage se fait en deux paliers, mais il peut être fait directement ou en plus de deux paliers.

Le patin comporte des rives très minces qui se refroidissent naturellement très vite pendant les phases d'homogénéisation. Aussi, il peut être utile d'effectuer un chauffage complémentaire de la partie de la section transversale du rail correspondant au patin, par exemple pendant le chauffage supplémentaire de la partie de la section transversale du rail correspondant au champignon.

Le mode de réalisation décrit est un traitement thermique au défilé dans lequel les différentes sections transversales du rail subissent successivement le traitement thermique. Mais ce traitement thermique peut être réalisé en préchauffant globalement le rail, par exemple dans un four, puis en surchauffant l'ensemble du patin, enfin en refroidissant tout le rail. Dans ce cas, les différentes sections transversales du rail sont traitées simultanément.

A titre de premier exemple, on a fabriqué un rail en acier dont la composition chimique, en poids, était: C = 0,78%, Mn = 1,04%, Si = 0,44%, Cr = 0,22%, le reste étant du fer et des impuretés résultant de l'élaboration. En fin de préchauffage qui a duré 4mn 30s, la température moyenne de l'âme et du patin était de 880°C. En fin de surchauffe, la température moyenne du champignon était de 985°C. La peau du patin a été refroidie à la vitesse de 9°C/s jusqu'à 380°C; le patin et l'âme ont été refroidis à la vitesse de 2°C/s. Après retour à la température ambiante, le rail a subi un très léger dressage. Dans toute la section, le rail avait une structure perlitique fine, la dureté du champignon était 377 HBW et la dureté de l'âme ou du patin était de 340 HBW. L'ouverture de l'âme, mesurée par un essai au trait de scie, était d'environ - 1,2 mm, alors que pour le même rail, traité selon l'art antérieur, l'ouverture de l'âme était de + 2,2 mm.

A titre de deuxième exemple, on a fabriqué un rail en acier dont la composition chimique, en poids, était: C = 0,77%, Mn = 0,91%, Si = 0,66%, Cr = 0,49%, le reste étant du fer et des impuretés résultant de l'élaboration. En fin de préchauffage qui a duré 4mn 30s, la température moyenne de l'âme et du patin était de 890°C. En fin de surchauffe, la température moyenne du champignon était de 940°C. La peau du patin a été refroidie à la vitesse de 7°C/s jusqu'à 350°C; le patin et l'âme ont été refroidis à la vitesse de 6°C/s. Après retour à la température ambiante, le rail a subi un très léger dressage. Dans toute la section, le rail avait une structure perlitique fine, la dureté du champignon, de l'âme et du patin était de 390 HBW. L'ouverture de l'âme, mesurée par un essai au trait de scie, était d'environ - 0,9 mm, alors que pour le même rail, traité selon l'art antérieur, l'ouverture de l'âme était de + 2,4 mm.

## Revendications

1. Procédé de traitement thermique d'un rail (1) en acier du type comprenant un champignon (2), une âme (3) et un patin (4), caractérisé en ce que:
- on préchauffe, successivement ou simultanément, chaque section transversale du rail (1) au dessus de la température de fin de transformation métallurgique au réchauffage de l'acier dont est constitué le rail, de façon à ce que, simultanément ou successivement, dans chaque section transversale du rail (1) l'acier ait uniformément une structure austénitique homogène,
- on surchauffe, successivement ou simultanément, la partie de chaque section transversale du rail (1) correspondant au champignon (2) de façon à ce que la température moyenne de ladite partie de chaque section transversale du rail (1) soit supérieure d'au moins 40 °C à la température moyenne de la partie de la même section transversale du rail (1) correspondant au patin (4), sans toute fois dépasser 1050°C et, de préférence, 1000°C,
- on refroidit, successivement ou simultanément, chaque section transversale du rail (1) au dessous de la température de fin de transformation au refroidissement de l'acier dont est constitué le rail, de façon à obtenir une structure perlitique fine dans toute la section transversale du rail (1),
- et, éventuellement, on laisse refroidir, simultanément ou successivement, chaque section transversale du rail (1) jusqu'à la température ambiante.

2. Procédé selon la revendication 1 caractérisé en ce que en fin de préchauffage, en tout point de chaque section transversale du rail (1) la température est supérieure à Ac3 + 100°C, Ac3 étant la température de transformation au réchauffage à vitesse lente de l'acier dont est constitué le rail (1).

3. Procédé selon la revendication 1 ou la revendication 2 caractérisé en ce que en fin de chauffage supplémentaire, la température moyenne de la partie de chaque section transversale du rail (1) correspondant au champignon (2) est supérieure d'au moins 80°C à la température moyenne de la partie de la même section transversale correspondant au patin (4).

4. Procédé selon l'une quelconque des revendications 1 à 3 caractérisé en ce que le préchauffage de chaque section transversale du rail (1) dure au moins 4 minutes.

5. Procédé selon la revendication 4 caractérisé en ce que le préchauffage comporte une succession alternée de préchauffages partiels et d'homogénéisation, de façon à obtenir en fin de préchauffage une répartition aussi homogène que possible de la température dans chaque section transversale du rail (1).

6. Procédé selon l'une quelconque des revendications 1 à 5 caractérisé en ce que, lors du refroidissement, la vitesse de refroidissement en peau du rail (1) au passage à la température de 700°C est inférieure à 10°C/s.

7. Procédé selon la revendication 6 caractérisé en ce que la vitesse de refroidissement en peau de l'âme (3) et du patin (4) du rail (1) au passage à la température de 700°C est inférieure à 5°C/s.

8. Procédé selon la revendication 6 ou la revendication 7 caractérisé en ce que en fin de refroidissement, la température en peau du champignon (2) du rail (1) est inférieure ou égale à 400°C.

9. Procédé selon l'une quelconque des revendications précédentes caractérisé en ce que le traitement thermique du rail (1) est réalisé au défilé par passage du rail (1) successivement dans un moyen de préchauffage (7), un moyen de surchauffage (8) et un moyen de refroidissement (9).

10. Procédé selon la revendication 9 caractérisé en ce que le moyen préchauffage (7) est un moyen de chauffage par induction fonctionnant à une fréquence supérieure ou égale à 2000 Hertz.

11. Procédé selon la revendication 10 caractérisé en ce que le moyen de préchauffage (7) comporte une pluralité de zones de chauffage séparées par des zones d'égalisation.

12. Procédé selon l'une quelconque des revendications 9 à 11 caractérisé en ce que le moyen de surchauffage (8) est un moyen de chauffage par induction fonctionnant à une fréquence supérieure ou égale à 1000 Hertz.

13. Procédé selon l'une quelconque des revendications 9 à 12 caractérisé en ce que le moyen de refroidissement (9) est constitué d'au moins deux, et de préférence, d'une pluralité de rampes (14, 15, 16) parallèles au rail, munies d'une pluralité de buses (17) pouvant souffler de l'air ou un brouillard, les buses (17) pouvant êtres commandées indépendamment les unes des autres ou par groupes.

## Claims

1. Process for heat treatment of a steel rail (1), of the type comprising a head (2), a web (3) and a flange (4), characterized in that:
- each cross-section of the rail (1) is preheated, successively or simultaneously, above the temperature of the end of the metallurgical heating transformation of the steel of which the rail is made, so that, simultaneously or successively, the steel in each cross-section of the rail (1) uniformly has a homogeneous austenitic structure,
- that part of each cross-section of the rail (1) which corresponds to the head (2) is overheated, successively or simultaneously, so that the average temperature of the said part of each cross-section of the rail (1) is greater by at least 40°C than the average temperature of that part of the same cross-section of the rail (1) which corresponds to the flange (4), but without exceeding 1050°C, and preferably 1000°C,
- each cross-section of the rail (1) is cooled, successively or simultaneously, below the temperature of tne end of the cooling transformation of the steel of which the rail is made, so as to obtain a fine pearlitic structure throughout the cross-section of the rail (1),
- and each cross-section of the rail (1) is optionally allowed to cool, simultaneously or successively, to ambient temperature.

2. Process according to Claim 1, characterized in that, at the end of preheating, the temperature is greater than Ac3 + 100°C at each point in each cross-section of the rail (1), Ac3 being the slow-rate heating transformation temperature of the steel of which the rail (1) is made.

3. Process according to Claim 1 or Claim 2, characterized in that, at the end of additional heating, the average temperature of that part of each cross-section of the rail (1) which corresponds to the head (2) is greater by at least 80°C than the average temperature of that part of the same cross-section which corresponds to the flange (4).

4. Process according to any one of Claims 1 to 3, characterized in that the preheating of each cross-section of the rail (1) lasts at least 4 minutes.

5. Process according to Claim 4, characterized in that the preheating includes an alternate succession of partial and homogenization preheatings, so as to obtain, at the end of preheating, the most homogeneous possible temperature distribution in each cross-section of the rail (1).

6. Process according to any one of Claims 1 to 5, characterized in that, during cooling, the skin cooling rate of the rail (1) on passing to the temperature of 700°C is less than 10°C/s.

7. Process according to Claim 6, characterized in that the skin cooling rate of the web (3) and of the flange (4) of the rail (1) on passing to the temperature of 700°C is less than 5°C/s.

8. Process according to Claim 6 or Claim 7, characerized in that, at the end of cooling, the skin temperature of the head (2) of the rail (1) is less than or equal to 400°C.

9. Process according to any one of the preceding claims, characterized in that the heat treatment of the rail (1) is carried out continuously by passing the rail (1) successively through a preheating means (7), an overheating means (8) and a cooling means (9).

10. Process according to Claim 9, characterized in that the preheating means (1) is an induction heating means operating at a frequency greater than or equal to 2000 hertz.

11. Process according to Claim 10, characterized in that the preheating means (7) includes a plurality of heating zones separated by equalization zones.

12. Process according to any one of Claims 9 to 11, characterized in that the overheating means (8) is an induction heating means operating at a frequency greater than or equal to 1000 hertz.

13. Process according to any one of claims 9 to 12, characterized in that the cooling means (9) consists of at least two, and preferably a plurality of, pipes (14, 15, 16) parallel to the rail, which are equipped with a plurality of nozzles (17) capable of blowing air or a mist, it being possible for the nozzles (17) to be controlled independently of one another or in groups.

## Patentansprüche

1. Verfahren zur Wärmebehandlung einer Stahlschiene (1) der Art, die einen Schienenkopf (2), einen Schienensteg (3) und einen Schienenfuß (4) umfasst, dadurch gekennzeichnet, dass:
- nacheinander oder gleichzeitig jeder transversale Abschnitt der Schiene (1) über die Endtemperatur der metallurgischen Umwandlung beim Erhitzen des Stahls, aus dem die Schiene besteht, hinaus erhitzt wird, so dass der Stahl gleichzeitig oder nacheinander in jedem transversalen Abschnitt der Schiene (1) eine homogene austenitische Struktur hat,
- nacheinander oder gleichzeitig der Bereich jedes transversalen Abschnitts der Schiene (1), der dem Schienenkopf (2) entspricht, erhitzt wird, und zwar so, dass die Durchschnittstemperatur um mindestens 40°C über der Durchschnittstemperatur des Bereichs des gleichen transversalen Abschnitts der Schiene (1) liegt, der dem Schienenfuß (4) entspricht, ohne jedoch 1050°C und vorzugsweise 1000°C zu überschreiten,
- nacheinander oder gleichzeitig jeder transversale Abschnitt der Schiene (1) unter die Endtemperatur der metallurgischen Umwandlung beim Abkühlen des Stahls, aus dem die Schiene besteht, heruntergekühlt wird, so dass man auf dem ganzen transversalen Abschnitt der Schiene (1) eine feine perlitische Struktur erhält,
- und eventuell jeder transversale Abschnitt der Schiene (1) nacheinander oder gleichzeitig bis auf Umgebungstemperatur abgekühlt wird.

2. Verfahren nach Anspruch 1, dadurch gekennzeichnet, dass die Temperatur am Ende des Vorwärmens an jedem Punkt jedes transversalen Abschnitts der Schiene (1) über Ac3 + 100°C beträgt, wobei Ac3 die Umwandlungstemperatur beim langsamen Erhitzen des Stahls ist, aus dem die Schiene (1) besteht.

3. Verfahren nach Anspruch 1 oder 2, dadurch gekennzeichnet, dass die Durchschnittstemperatur des Bereichs jedes transversalen Abschnitts der Schiene (1), der dem Schienenkopf (2) entspricht, am Ende der zusätzlichen Erwärmung um mindestens 80°C höher als die Durchschnittstemperatur des Bereichs des gleichen transversalen Abschnitts ist, der dem Schienenfuß (4) entspricht.

4. Verfahren nach einem der Ansprüche 1 bis 3, dadurch gekennzeichnet, dass das Vorwärmen jedes transversalen Abschnitts der Schiene (1) mindestens 4 Minuten dauert.

5. Verfahren nach Anspruch 4, dadurch gekennzeichnet, dass das Vorwärmen eine abwechselnde Folge von partiellen Vorwärmschritten und Homogenisierungsschritten ist, damit am Ende des Vorwärmens eine so homogene Verteilung der Temperatur wie möglich in jedem transversalen Abschnitt der Schiene (1) erreicht wird.

6. Verfahren nach einem der Ansprüche 1 bis 5, dadurch gekennzeichnet, dass beim Abkühlen die Hautabkühlgeschwindigkeit der Schiene (1) beim Übergang zur Temperatur von 700°C unter 10°C/s liegt.

7. Verfahren nach Anspruch 6, dadurch gekennzeichnet, dass die Hautabkühlgeschwindigkeit des Stegs (3) und des Fußes (4) der Schiene (1) beim Übergang zur Temperatur von 700°C unter 5°C/s liegt.

8. Verfahren nach Anspruch 6 oder 7, dadurch gekennzeichnet, dass die Hauttemperatur des Kopfes (2) der Schiene (1) am Ende der Abkühlung niedriger als oder gleich 400°C ist.

9. Verfahren nach einem der vorstehenden Ansprüche, dadurch gekennzeichnet, dass die Wärmebehandlung der Schiene (1) im Durchlaufverfahren durch aufeinanderfolgendes Führen der Schiene (1) in eine Vorwärmvorrichtung (7), eine Überhitzungsvorrichtung (8) und eine Abkühlvorrichtung (9) erfolgt.

10. Verfahren nach Anspruch 9, dadurch gekennzeichnet, dass die Vorwärmvorrichtung (7) eine Induktionsheizung ist, die auf einer Frequenz von über oder gleich 2000 Hertz funktioniert.

11. Verfahren nach Anspruch 10, dadurch gekennzeichnet, dass die Vorwärmvorrichtung (7) mehrere Heizbereiche umfasst, die durch Egalisierungsbereiche getrennt sind.

12. Verfahren nach einem der Ansprüche 9 bis 11, dadurch gekennzeichnet, dass die Überhitzungsvorrichtung (8) eine Induktionsheizung ist, die auf einer Frequenz von über oder gleich 1000 Hertz funktioniert.

13. Verfahren nach einem der Ansprüche 9 bis 12, dadurch gekennzeichnet, dass die Abkühlvorrichtung (9) aus mindestens zwei und vorzugsweise mehreren Rampen (14, 15, 16) besteht, die mit einer Mehrzahl Düsen (17) versehen sind, die Luft oder einen Nebel sprühen können, wobei die Düsen (17) einzeln oder gruppenweise gesteuert werden können.
